# EUROPÄISCHE PATENTANMELDUNG

(11) **EP 4 725 856 A1**
(43) Veröffentlichungstag der Anmeldung: **15.04.2026**
(21) Anmeldenummer: 25208234.2
(22) Anmeldetag: 13.10.2025
(51) Int. Cl.: B65C 9/18, B25J 15/06, B29C 49/42, B65B 35/18, B65G 47/91, B65H 5/14

(54) **VERPACKUNGSEINRICHTUNG MIT TESLAVENTIL, VERFAHREN ZUM TRANSPORTIEREN VON KUNSTSTOFFVORFORMLINGEN UND VERFAHREN ZUM ETIKETTIEREN VON BEHÄLTNISSEN**

(30) Priorität: 14.10.2024 DE 102024129637
(71) Anmelder: Krones AG, 93073 Neutraubling (DE)
(72) Erfinder: Peter, Daniel, 93073 Neutraubling (DE); Kindl, Norbert, 93073 Neutraubling (DE); Zech, Johannes, 93073 Neutraubling (DE); Ehrismann, Tobias, 93073 Neutraubling (DE)
(74) Vertreter: Bittner, Bernhard

(57) **Zusammenfassung**

Verpackungsvorrichtung (1) für Behältnisse, mit wenigstens einer Ansaugeinrichtung (10), welche dazu geeignet und bestimmt ist, ein flächiges Element oder einen Kunststoffvorformling anzusaugen, wobei die Ansaugeinrichtung (10) wenigstens eine mit einer Vakuumquelle verbindbare Hauptöffnung (4) aufweist und wenigstens einer Ansaugöffnung (2), welche dazu geeignet und bestimmt ist, das Element anzusaugen, wobei diese Ansaugöffnung (2) mit der Hauptöffnung (4) in Strömungsverbindung ist, wobei im Strömungspfad zwischen der Hauptöffnung (4) und der wenigstens eine Ansaugöffnung (2) ein passives fluidisches Ventil, insbesondere Teslaventil (6a, 6b) angeordnet ist. Verfahren zum Etikettieren von Behältnissen mit einer solchen Vorrichtung, wobei das Etikett mittels der Ansaugeinrichtung gehalten wird. Verfahren zum Transportieren von Kunststoffvorformlingen mit einer solchen Vorrichtung, wobei die Kunststoffvorformlinge mittels der Ansaugeinrichtungen gehalten werden.

## Beschreibung

Die vorliegende Erfindung bezieht sich auf eine Verpackungsvorrichtung mit einer Ansaugeinrichtung. Im Bereich der Verpackungsindustrie und insbesondere im Bereich der Getränke herstellenden Industrie sind Vorrichtungen bekannt, bei denen Elemente, wie etwa Folien, Lagen oder Etiketten kurzzeitig bzw. vorrübergehend angesaugt werden, um sie beispielsweise an eine andere Maschine zu übergeben oder um Sie an einem anderen Element wie etwa einem Behältnis anzuordnen.

So ist es beispielsweise bei Etikettiermaschinen bekannt, dass ein an einem Behältnis anzuklebendes Etikett zeitweise mittels Vakuum an einer Einrichtung wie einer Saugleiste gehalten wird. Es ist beispielsweise auch für Palettiervorrichtungen bekannt, dass Zwischenlagen zeitweise mittels Ansaugvorrichtungen angesaugt werden.

Ein weiteres Beispiel für eine Anwendung der Erfindung sind Saugleisten zur automatischen Rollenverklebung von Etikettenrollen bzw. deren Endabschnitten. Ein weiteres Beispiel für eine Anwendung sind Saugeinrichtungen, mittels denen Zwischenlagen oder Kartons durch Vakuum gegriffen werden.

Eine weitere Anwendung der vorliegenden Erfindung ist eine Vorrichtung zum Halten von Objekten, insbesondere von (einzelnen) Kunststoffvorformlingen. Derartige Kunststoffvorformlinge werden verwendet, um zum Kunststoffflaschen expandiert zu werden. Dabei weisen derartige Kunststoffvorformling einen relativ harten bzw. steifen Grundkörper auf, der auch der Anlegung eines Vakuums standhält. Es ist bekannt, diese Kunststoffvorformlinge anzusaugen, um sie so zu halten. Daneben wäre es auch denkbar, andere Behältnisse wie insbesondere kleinere Kunststoffflaschen oder kleinere Glasbehältnisse wie etwa Reagenzgläser anzusaugen. Die Anmelderin behält sich vor, auch auf eine derartige Ausgestaltung Schutz zu beanspruchen.

Aus dem Stand der Technik ist es bekannt, Kunststoffvorformlinge mittels Vakuumgreifern zu halten. Falls hier eine Vielzahl von Kunststoffvorformlingen gehalten werden soll und einzelne Kunststoffvorformlinge sich ungewollt lösen, kann es auch hier dazu kommen, dass das Vakuum zusammenbricht und alle Kunststoffvorformlinge abfallen.

Die vorliegende Erfindung wird unter Bezugnahme auf eine Saugleiste einer Etikettiervorrichtung beschrieben. Es wird jedoch darauf hingewiesen, dass im Bereich der Verpackungsindustrie auch andere Vorrichtungen denkbar sind, welche ein derartiges Ansaugen von Elementen und insbesondere flächigen Elementen bewirken.

Die Erfindung wird weiterhin unter Bezugnahme auf einen Vakuumgreifer für Kunststoffvorformlinge beschrieben, der dazu geeignet und bestimmt ist, eine Vielzahl von Kunststoffvorformlingen mittels Vakuum zu greifen.

Die EP 2 019 785 B1 beschreibt einen Vakuumzylinder für eine Etikettiervorrichtung. Dieser weist eine Vielzahl von Saugleisten auf.

Die US 3,663,02 beschreibt eine Anordnung mit Saugöffnungen in einer drehbaren Trommel. Dabei sind erste und zweite Ventile vorgesehen und Schaltmittel zum Schalten dieser Ventile, wobei diese Schaltmittel die Ventile in Reaktion auf ein Fluiddrucksignal betätigen können. Diese Ventile werden daher aktiv geschaltet.

Aus der WO 2017/001071 ist ein Verfahren zum Vorbereiten von Etiketten bekannt. Dabei kann das Abgeben eines Etiketts durch eine Deaktivierung von Ansaugöffnungen erfolgen.

Eine aus dem internen Stand der Technik der Anmelderin bekannte Saugleiste, die ein Etikett zur Verklebung bereitstellt und sich insbesondere in einem Etikettieraggregat befindet, weist entlang einer Längsachse eine Vielzahl von Bohrungen auf, die alle zu einem Verteilerkanal zusammenlaufen. An den Verteilerkanal wird ein Vakuum angelegt.

Dies führt dazu, dass Luft über alle Bohrungen angesaugt wird. Legt man nun ein Etikett auf die Saugleiste, wird dieses durch den an den durch das Etikett abgedeckten Löchern entstehenden Unterdruck auf der Saugleiste gehalten.

Teilweise sollen jedoch mit derselben Saugleiste Etiketten verschiedener Höhen gehalten werden. Üblicherweise wird daher diese Saugleiste auf die maximale Etikettenhöhe angelegt. Diese kann beispielsweise in einem Bereich von 200 mm liegen.

Ist ein Etikett niedriger, werden nicht alle Bohrungen bzw. Ansaugöffnungen von dem Etikett bedeckt. Insbesondere bei niedrigeren Etiketten werden nur sehr wenige Löcher bedeckt. Durch die nicht abgedeckten Löcher wird jedoch andauernd wieder Luft angesaugt, sodass das Aufbauen eines Vakuums deutlich erschwert wird. Um das Etikett trotzdem in Position zu halten, ist ein sehr hoher Volumenstrom notwendig und damit auch ein hoher Luftverbrauch.

Der vorliegenden Erfindung liegt daher die Aufgabe zugrunde, eine Verpackungsvorrichtung zur Verfügung zu stellen, welche insbesondere auch ein energiesparendes Ansaugen unterschiedlich großer Elemente oder einer Vielzahl von einzelnen Elementen, insbesondere Kunststoffvorformlingen erreicht. Insbesondere soll auch dann ein effektives Ansaugen ermöglicht werden, wenn nicht alle Ansaugöffnungen der Ansaugeinrichtung von dem Element bedeckt werden.

Es wäre nunmehr möglich, in derartigen Saugleisten beispielsweise Kugelventile vorzusehen, welche bei einem Ansaugen übersolche Ansaugöffnungen sperren, welche nicht verdeckt sind. Allerdings stellt dies eine relativ aufwändige mechanische Lösung dar, die auch verschleißanfällig ist.

Eine weitere der Erfindung zugrunde liegende Aufgabe besteht darin, eine Ansaugeinrichtung vorzuschlagen, welche idealerweise mit wenig oder ohne mechanische Elemente auskommt.

Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Verpackungsvorrichtung, insbesondere für Behältnisse weist wenigstens eine Ansaugeinrichtung auf, welche dazu geeignet und bestimmt ist ein Element, und insbesondere ein flächiges Element und insbesondere ein flächiges und flexibles Element oder ein einzelnes Element und insbesondere einen Kunststoffvorformling (und bevorzugt eine Vielzahl von Kunststoffvorformlingen) anzusaugen. Unter einem flächigen Element wird ein Element verstanden, welches sich in zwei zueinander senkrechte Richtungen erstreckt und eine Dicke aufweist, welche wesentlich geringer ist als die Erstreckung in den genannten zueinander senkrechten Richtungen. Beispiele für flächige Elemente sind z.B. Etiketten oder Folien oder Zwischenlagen. Bevorzugt ist dieses flächige Element flexibel. Bei dem einzelnen Element handelt es sich insbesondere um einen Kunststoffvorformling.

Dabei weist die Ansaugeinrichtung wenigstens eine mit einer Vakuumquelle bzw. einer Unterdruckquelle verbindbare Hauptöffnung auf, und wenigstens eine Ansaugöffnung und bevorzugt wenigstens zwei Ansaugöffnungen, welche dazu geeignet und bestimmt ist bzw. sind, das Element anzusaugen (und insbesondere in Reaktion auf einen über die Hauptöffnung aufgebrachten Unterdruck anzusaugen) und/oder bevorzugt zeitweise (an der Ansaugeinrichtung) zu halten.

Bevorzugt ist über die Hauptöffnung ein gasförmiges Medium und insbesondere Luft ansaugbar. Bevorzugt handelt es sich bei den Ventilen um mit Luft betätigte Ventile, vorzugsweise um Teslaventile.

Dabei steht diese Ansaugöffnung und bevorzugt stehen diese Ansaugöffnungen wenigstens zeitweise mit der Hauptöffnung in Strömungsverbindung. Es ist dabei möglich, dass das Element unmittelbar an der oder den Ansaugöffnungen gehalten wird, es wäre jedoch auch denkbar, dass zwischen der oder den Ansaugöffnungen und dem Element eine weitere Einrichtung angeordnet ist, welches jedoch eine Strömungsverbindung zwischen den Ansaugöffnungen und dem anzusaugenden Element herstellt oder zulässt.

Erfindungsgemäß ist in einem Strömungspfad zwischen der Hauptöffnung und der Ansaugöffnung oder wenigstens einer der beiden Ansaugöffnungen ein passives fluidisches Ventil und insbesondere ein Tesla Ventil angeordnet.

Ein Teslaventil ist eine Vorrichtung, die als passives, fluidisches Ventil fungiert. Es kann als eine Art Rückschlagventil ohne bewegliche mechanische Teile betrachtet werden. Die Grundidee eines Teslaventils besteht darin, dass der Strömungswiderstand in eine Flussrichtung geringer als in die entgegengesetzte ist. Hierdurch lässt sich erreichen, dass die Strömung eine Vorzugsrichtung erhält oder das Fluid nur noch in eine Richtung strömt, also eine Gleichrichterwirkung erreicht wird.

Das Grundprinzip eines Teslaventils ist aus der US 1,329,559 bekannt.

Der Wirkungsmechanismus von Teslaventilen ist stark von der Reynolds-Zahl (und damit auch von der Größe des Ventils) abhängig. In großen Ventilen mit turbulenter Strömung und Re > 1700 beruht die Ventilfunktion überwiegend auf Trägheitskräften. In mikroskopisch kleinen Ventilen mit vorwiegend laminarer Strömung und Re « 1000 dominieren hingegen Kräfte aufgrund der Viskosität des Fluids.

Bevorzugt ist das Teslaventil oder sind die Teslaventile saugseitig verwendet. Dies bedeutet, dass die Strömung durch das oder die Teslaventile durch eine Unterdruckquelle erzeugt wird.

Unter einer Vakuumquelle oder einer Unterdruckquelle wird eine Quelle verstanden, welche aus der Hauptöffnung ein Medium und insbesondere Luft saugt und dabei einen Unterdruck erzeugt. Besonders bevorzugt ist die Vakuumquelle und/oder Unterdruckquelle dazu geeignet und bestimmt, einen Unterdruck zu erzeugen, der zwischen 0,2 und 0,8bar abs., bevorzugt zwischen 0,3 und 0,7bar abs. und bevorzugt zwischen 0,4 und 0,6bar abs. liegt.

Ein Ventil dieser Art ist aus dem Stand der Technik seit langem bekannt. Der Vorteil eines derartigen Ventils ist, dass dieses ohne Verwendung mechanischer Teile auskommt, sondern eine entsprechende Ventilwirkung durch einen Gegenstrom erzielt wird, wie oben erwähnt.

Durch die Verwendung eines derartigen Teslaventils kann insbesondere erreicht werden, dass solche Öffnungen, welche nicht von einem (flächigen) Element bedeckt werden, gleichwohl zumindest teilweise sperren, sodass kein unnötiges Vakuum oder ein unnötiger Volumenstrom vergeudet werden muss.

In der weiteren Anwendung wird vorgeschlagen, ein Teslaventil für Greifeinrichtungen zum Greifen von Kunststoffvorformlingen zu verwenden.

Bevorzugt weist dabei diese Greifeinrichtung eine Vielzahl von Vakuumgreifern bzw. Greifelementen auf, welche jeweils zum Halten eines einzelnen Kunststoffvorformlingen geeignet und bestimmt ist. Bevorzugt ist jeder dieser Vakuumgreifer über wenigstens ein Teslaventil mit einer Vakuumquelle verbunden.

Für den Fall, dass ein Vakuumgreifer keinen Kunststoffvorformling aufnimmt oder von diesem Vakuumgreifer ein Kunststoffvorformling abfällt, bewirkt das zugeordnete Teslaventil, dass an diesem Vakuumgreifer kein Vakuum anliegt oder über diesen Vakuumgreifer keine Luft angesaugt wird, welche das Vakuum an den anderen Greifer mindern könnte, Bei einer weiteren bevorzugten Ausführungsform ist in dem Strömungspfad zwischen der Öffnung und jeder der Ansaugöffnungen (jeweils) ein fluidisches Ventil und insbesondere ein Teslaventil angeordnet. Auf diese Weise wird die Gestaltungsfreiheit hinsichtlich der Ansaugeinrichtung erhöht, da flächige Elemente unabhängig von ihrer Position (gegenüber der Ansaugeinrichtung) und Größe angesaugt werden können. Bevorzugt ist als jeder Öffnung mindestens ein Ventil zugeordnet, es kann aber auch sein, dass 2 Öffnungen oder mehrere Öffnungen einem Ventil zugeordnet sind.

Es wäre jedoch auch denkbar, dass in einzelnen Strömungspfaden zwischen der Hauptöffnung und den Ansaugöffnungen keine Teslaventile vorgesehen sind. Dies können dabei beispielsweise Ansaugöffnungen sein, an denen unabhängig von einer beispielsweise Etikettengröße oder einer Größe des Elements stets ein derartiges Element anliegt.

Bei einer bevorzugten Ausführungsform weist die Ansaugeinrichtung eine Vielzahl von Ansaugöffnungen auf, welche wenigstens zeitweise in Strömungsverbindung mit der Hauptöffnung stehen (oder bringbar sind), wobei bevorzugt wenigstens zwischen einem Teil dieser Ansaugöffnungen und der Hauptöffnung und bevorzugt zwischen allen Ansaugöffnungen und der Hauptöffnung fluidische Ventile und insbesondere Teslaventile angeordnet sind.

Bevorzugt sind wenigstens drei, bevorzugt wenigstens vier, bevorzugt wenigstens fünf, bevorzugt wenigstens sechs und bevorzugt wenigstens sieben Ansaugöffnungen vorgesehen.

Bei einer weiteren vorteilhaften Ausführungsform weist die Ansaugeinrichtung eine Vakuumverteileinrichtung auf, welche über die Hauptöffnung aufgebrachtes Vakuum (bzw. einen über die Hauptöffnung aufgebrachten Unterdruck) auf die einzelnen Ansaugöffnungen verteilt. Dabei wird unter dem aufgebrachten Vakuum insbesondere ein Unterdruck verstanden.

Genauer wird eine Unterdruckwelle über die Hauptöffnung ein Medium und insbesondere Luft ansaugen und diese Ansaugwirkung wird auf die einzelnen Ansaugöffnungen und/oder die einzelnen Teslaventile verteilt.

Bei einer weiteren bevorzugten Ausführungsform ist ein Strömungsquerschnitt der Hauptöffnung größer als der Strömungsquerschnitt der einzelnen Ansaugöffnungen. Bevorzugt ist ein Strömungsquerschnitt der Hauptöffnung größer als die Summe der Strömungsquerschnitte aller Ansaugöffnungen. Bevorzugt ist ein Strömungsquerschnitt der Hauptöffnung größer als das 1,5fache der Summe der Strömungsquerschnitte aller Ansaugöffnungen, bevorzugt größer als das 2,0fache und bevorzugt größer als das 2,5fache.

Bevorzugt ist ein Strömungsquerschnitt der Hauptöffnung kleiner als das 25fache der Summe der Strömungsquerschnitte aller Ansaugöffnungen, bevorzugt kleiner als das 15fache und bevorzugt kleiner als das 5fache.

Der Hauptkanal ist daher bevorzugt deutlich größer als die Summe der Einzelkanäle. Bei einer weiteren Querschnittsreduktion der einzelnen Kanäle wären einerseits noch bessere Ergebnisse hinsichtlich erzeugbarem Unterdruck zu erwarten. Jedoch wird bei weiterer Reduktion auch der Volumenstrom aufgrund Reibung etc. weiter abnehmen, sodass ein Punkt erreicht wird, ab dem die Haltekraft überproportional abnimmt.

Bevorzugt weisen Leitungen, welche zu den Ansaugöffnungen führen und/oder die Ansaugöffnungen einen Strömungsquerschnitt auf, der größer ist als 0,2mm², bevorzugt größer als 0,4mm², bevorzugt größer als 0,6mm², bevorzugt größer als 0,8mm² und bevorzugt größer als 1,0mm².

Bevorzugt weisen Leitungen, welche zu den Ansaugöffnungen führen und/oder die Ansaugöffnungen einen Strömungsquerschnitt auf, der kleiner ist als 4,0mm², bevorzugt kleiner als 3,5mm², bevorzugt kleiner als 3,0mm², bevorzugt kleiner als 2,5mm² und bevorzugt kleiner als 2,0mm².

Bevorzugt handelt es sich bei der Saugleiste um ein additiv gefertigtes Bauteil. Es wäre jedoch auch möglich, dass es sich bei der Saugleiste und/oder den Ventilen um durch ein Direktdruckverfahren gefertigtes Bauteil handelt. Daneben könnten das oder die Ventile und/oder die Saugleiste auch mittels einzelnen Rohrbögen zusammengesetzt und/oder geschweißt sein.

Bei einer weiteren bevorzugten Ausführungsform ist die Ansaugeinrichtung oder sind das oder die fluidischen Ventile reinigbar und insbesondere mittels eines fließfähigen Reinigungsmediums reinigbar. Dabei kann eine Reinigung, (z.B. ein Ausblasen) genau entgegen der Wirkungsrichtung des Teslaventils erfolgen. Auf diese Weise kann eine gute Durchströmung gewährleistet sein, was eine Reinigung, beispielsweise mit Druckluft oder einem anderen Gas oder aber einer Flüssigkeit ermöglicht. Die oben genannten Strömungsquerschnitte sind daher auch deshalb in den oben genannten Grenzen gewählt, damit eine Reinigbarkeit der Ansaugeinrichtung ermöglicht oder erleichtert wird

Bei einer weiteren bevorzugten Ausführungsform ist die Verpackungseinrichtung aus einer Gruppe von Verpackungseinrichtungen ausgewählt, welche Etikettiermaschinen, Fülleinrichtungen (zum Befüllen von Behältnissen mit Flüssigkeiten und insbesondere mit Getränken), Palettiermaschinen, Transporteinrichtungen zum Transportieren von Kunststoffvorformlingen oder Kunststoffflaschen, Verschließeinrichtungen zum Verschließen von Behältnissen, Sterilisiereinrichtungen zum Sterilisieren von Behältnissen, Sortiereinrichtungen zum Sortieren von Kunststoffvorformlingen, allgemein Ausstattungseinrichtungen zum Ausstatten von Behältnissen mit Etiketten, Verschlüssen und dergleichen enthält.

Bei einer weiteren bevorzugten Ausführungsform weist die Verpackungseinrichtung eine Einrichtung zum Herstellen von Kunststoffbehältnissen auf, wobei diese Einrichtung eine Herstellungseinrichtung zum Herstellen von Kunststoffvorformlingen und eine Umformungseinrichtung zum Umformen von Kunststoffvorformlingen zu Kunststoffbehältnissen aufweist sowie eine Transporteinrichtung zum wenigstens abschnittsweise Transportieren von Kunststoffvorformlingen von der Herstellungseinrichtung zur Umformungseinrichtung und diese Transporteinrichtung weist die Ansaugeinrichtung auf.

So kann beispielsweise eine Etikettiermaschine eine Ansaugleiste aufweisen, welche dazu geeignet und bestimmt ist, wenigstens zeitweise Etiketten anzusaugen bzw. zu halten. Im Falle einer Palettiermaschine kann ebenfalls eine Ansaugeinrichtung vorgesehen sein, welche dazu geeignet und bestimmt ist, Zwischenlagen für eine Palettierung wenigstens zeitweise anzusaugen. Daneben kann die Ansaugleiste dazu geeignet und bestimmt sein, einzelne Kunststoffvorformlinge anzusaugen.

Bei einer weiteren bevorzugten Ausführungsform weist die Verpackungseinrichtung wenigstens eine Greifeinrichtung auf, welche zum Greifen einer Vielzahl von Kunststoffvorformlingen geeignet und bestimmt ist und die Ansaugeinrichtung ist bevorzugt ein Bestandteil dieser Greifeinrichtung.

Bei einer weiteren bevorzugten Ausführungsform weist die Greifeinrichtung eine Vielzahl von Ansaugrohren auf, welche (jeweils) zum Ansaugen der Kunststoffvorformlinge geeignet und bestimmt sind.

Bevorzugt ist jedes dieser Ansaugrohre dazu geeignet und bestimmt, genau einen Kunststoffvorformling anzusaugen. Bevorzugt weisen diese Vakuumgreifer jeweils Anlageelemente auf, welche an einen Mündungsrand der Kunststoffvorformlinge anlegbar sind und welche bevorzugt die Mündung der Kunststoffvorformlinge derart verschließen, dass über die Ansaugrohre ein Vakuum auf den jeweiligen Kunststoffvorformling aufgebracht werden kann.

Bevorzugt ist die Ansaugöffnung an einem dem Kunststoffvorformling zugewandten Ende dieses Ansaugrohres angeordnet. Auch wäre es möglich, dass sich das Ansaugrohr an die ihm zugeordnete Ansaugöffnung anschließt.

Bevorzugt weisen die Ansaugrohre einen Durchmesser auf, der größer ist als 1mm, bevorzugt größer als 2mm, bevorzugt größer als 3mm und besonders bevorzugt größer als 4mm. Bevorzugt weisen die Ansaugrohre einen Durchmesser auf, der geringer ist als 20mm, bevorzugt geringer als 18mm, bevorzugt geringer als 16mm, bevorzugt geringer als 14mm, bevorzugt geringer als 12mm und besonders bevorzugt geringer als 10mm.

Bevorzugt weisen die Ansaugöffnungen, wenn sie zum Ansaugen von Kunststoffvorformlingen (ggfs. auch über die Ansaugrohre) dienen, einen Durchmesser auf, der größer ist als 1mm, bevorzugt größer als 2mm, bevorzugt größer als 3mm und besonders bevorzugt größer als 4mm. Bevorzugt weisen die Ansaugöffnungen, wenn sie zum Ansaugen von Kunststoffvorformlingen dienen, einen Durchmesser auf, der geringer ist als 20mm, bevorzugt geringer als 18mm, bevorzugt geringer als 16mm, bevorzugt geringer als 14mm, bevorzugt geringer als 12mm und besonders bevorzugt geringer als 10mm] Bevorzugt weisen daher die Ansaugöffnungen, welche zum Ansaugen von flächigen Elementen dienen einen kleineren Querschnitt auf als die Öffnungen welche zum Ansaugen von Kunststoffvorformlingen dienen.

Bevorzugt weisen auch die Teslaventile, welche zum Ansaugen von Kunststoffvorformlingen dienen jeweils größere Strömungsquerschnitte auf als die Teslaventile, welche zum Ansaugen von flächigen Elementen dienen.

Bevorzugt weisen die Ansaugrohre eine Länge auf, die größer ist als 1cm, bevorzugt größer als 2cm, bevorzugt größer als 3cm und bevorzugt größer als 4cm. Bevorzugt weisen die Ansaugrohre eine Länge auf, die geringer ist als 20cm, bevorzugt geringer als 15cm, bevorzugt geringer als 12cm und besonders bevorzugt geringer als 10cm.

Bevorzugt sind die Ansaugrohre geradlinig ausgebildet. Bevorzugt sind die Ansaugrohre parallel zueinander ausgerichtet. Besonders bevorzugt sind die Ansaugrohre parallel zu den an den Ansaugrohren gehaltenen Kunststoffvorformlingen ausgerichtet.

Bevorzugt ist an den Ansaugrohren jeweils ein Ansaugelement zum Ansaugen eines Kunststoffvorformlings angeordnet. Bevorzugt weist dieses Ansaugelement einen scheibenartigen Körper auf, der vollumfänglich mit dem Mündungsrand des jeweiligen Kunststoffvorformlings in Kontakt bringbar ist.

Bevorzugt weist die Ansaugeinrichtung eine Vielzahl von Ansaugöffnungen auf, wobei bevorzugt an jeder dieser Ansaugöffnungen ein Kunststoffvorformling anordenbar ist.

### Bevorzugt sind diese Ansaugöffnungen in der gleichen Richtung ausgerichtet

Im Falle einer Transporteinrichtung kann die Ansaugeinrichtung dazu bestimmt sein, Kunststoffvorformlinge wenigstens teilweise zu halten. Die Kunststoffvorformlinge können beispielsweise über eine Außenoberfläche ihres Grundkörpers wenigstens zeitweise gehalten werden.

Bei der Anwendung einer Verschließmaschine kann die Ansaugeinrichtung dazu geeignet und bestimmt sein, wenigstens zeitweise Behälterverschlüsse zu halten.

Bei einer weiteren vorteilhaften Ausführungsform ist die Ansaugeinrichtung beweglich angeordnet. So kann beispielsweise die Ansaugeinrichtung an einem drehbaren Träger beispielsweise einer Etikettiermaschine (beispielsweise einem Vakuumzylinder) angeordnet sein.

Bei einer weiteren vorteilhaften Ausführungsform ist die Ansaugeinrichtung als Vakuumleiste ausgebildet, welche insbesondere dazu geeignet und bestimmt ist, Etiketten anzusaugen und/oder Etiketten (oder Bestandteile von Etiketten) wenigstens zeitweise zu fixieren.

Bevorzugt sind die Ansaugöffnungen entlang einer Längsrichtung dieser Ansaugleiste angeordnet. Bevorzugt ist es möglich, dass die Ansaugleiste ein Bestandteil eines Vakuumzylinders ist. So können beispielsweise an einem Vakuumzylinder mehrere solcher Ansaugleisten vorgesehen sein.

Der Vakuumzylinder fungiert in der Etikettiermaschine sozusagen als Transfermodul der Etiketten vom "Stapel" oder der Rolle auf das Behältnis. Dabei rotiert der Vakuumzylinder, nimmt bei einem vorgegebenen Winkel, etwa einem Winkel von 0° ein Etikett auf und spendet dieses nach einem Drehwinkel α an das Behältnis.

Während dieses Transports muss das Etikett gehalten werden. Dies geschieht über Saugleisten/Vakuumleisten, die sich im Abstand des abgewickelten Etikettes auf dem Vakuumzylinder verteilt wiederfinden. So wird bevorzugt immer der Etikettenanfang und das Etikettenende von einer Saugleiste gehalten. Diese Saugleisten werden bevorzugt durch eine mechanische Kulisse an- und abgeschalten. Zwischen diesen Saugleisten finden sich in der Regel viele weitere Vakuumbohrungen um das Etikett auch im mittleren Bereich an den Vakuumzylinder zu binden.

Bei einer weiteren vorteilhaften Ausführungsform weist die Vakuumleiste einen Träger auf, an welchem bevorzugt die Ansaugöffnungen angeordnet sind. Bevorzugt schließen sich an die jeweiligen Ansaugöffnungen Strömungskanäle an, welche zu den einzelnen Teslaventilen führen.

Bevorzugt ist an diesem Träger eine Dichtungseinrichtung und/oder ein flexibles Element angeordnet.

Bevorzugt bildet diese Dichtungseinrichtung und/oder das flexible Element eine Anlageoberfläche aus, an welcher das anzusaugende Element anlegbar ist.

Besonders bevorzugt ist die besagte Dichtungseinrichtung und/oder das flexible Element lösbar an den Träger angeordnet. Besonders bevorzugt ist die Dichtungseinrichtung gegenüber einer Längsrichtung des Trägers bewegbar und insbesondere verschiebbar.

Bei einer weiteren bevorzugten Ausführungsform weist der Träger Haltenuten zum Halten der Dichtungseinrichtung auf. So kann beispielsweise ein Halteprofil des Trägers schwalbenschwanzartig ausgeführt sein.

Bei einer bevorzugten Ausführungsform ist die Dichtungseinrichtung flexibel. Besonders bevorzugt ist die Dichtungseinrichtung aus Silikon hergestellt.

Einer weiteren vorteilhaften Ausführungsform sind in der Dichtungseinrichtung DurchgangsÖffnungen von einer Unterseite zu einer Oberseite, Strömungskanäle und/oder DurchgangsÖffnungen angeordnet. Besonders bevorzugt sind in einem montierten Zustand der Dichtungseinrichtung an dem Träger die Durchgangsöffnungen derart angeordnet, dass sie mit den Ansaugöffnungen fluchten bzw. von den Ansaugöffnungen angesagtes Medium auch durch die Dichtungseinrichtung hindurch angesaugt wird.

Besonders bevorzugt ist der Träger als Verteilerblock ausgeführt. Besonders bevorzugt sind die besagten Ansaugöffnungen an dem Träger angeordnet.

Bei einer weiteren vorteilhaften Ausführungsform sind die Ventile, insbesondere die Teslaventile innerhalb des Trägerblocks ausgebildet.

Besonders bevorzugt ist die Dichtungseinrichtung schmaler als die Leiste bzw. der Träger selbst, sie erstreckt sich also bevorzugt in einer senkrecht zur Längsrichtung der Leiste bzw. des Trägers stehenden Richtung weniger als die Trägereinrichtung selbst.

Besonders bevorzugt weist die Dichtungseinrichtung eine Halteoberfläche auf, an welcher beispielsweise Etiketten angelegt werden oder mittels welcher diese gehalten werden können.

Die Ausgestaltung des Trägers und der Dichtungseinrichtung bringt den Vorteil, dass die Dichtungseinrichtung als Verschleißteil ausgeführt werden kann, welches ersetzt werden kann, ohne dass hierzu auch der Träger eingewechselt werden muss.

Bei einer weiteren vorteilhaften Ausführungsform weist die Ansaugeinrichtung eine Filtereinrichtung auf, um die von den Ansaugöffnungen angesaugte Luft zu filtern. So könnte beispielsweise zwischen den Ansaugeinrichtungen und der Dichtungseinrichtung eine Filterlage vorgesehen sein, welche die durch diese Filterlage hindurchtretende Luft oder allgemein das durch die Filterlage tretende und zu den Ansaugöffnungen gelangende Medium filtert.

Auf diese Weise kann eine Verschmutzung der Teslaventile verhindert oder zumindest verringert werden. Auch könnte eine derartige Filtereinrichtung in die Dichtungseinrichtung eingearbeitet sein.

Bei einer weiteren bevorzugten Ausführungsform weisen die Teslaventile jeweils TeslaventilKanäle auf, welche sich zu den Ansaugöffnungen erstrecken, wobei sich bevorzugt diese Teslaventilkanäle in unterschiedliche Richtungen erstrecken.

Bevorzugt sind die Ventile derart angeordnet, dass deren Kanäle im Wesentlichen senkrecht zur Ansaugoberfläche ausgerichtet sind. Dies ist strömungstechnisch besonders günstig.

Unter im Wesentlichen senkrecht wird dabei verstanden, dass die Ausrichtung um weniger als 10° von der senkrechten Richtung, bevorzugt um weniger als 5° und besonders bevorzugt um weniger als 3° von der senkrechten Richtung abweicht.

Bevorzugt erstrecken sich die Teslaventil - Kanäle in einer Draufsicht auf den Haltekörper teilweise nach oben und teilweise nach unten.

Bei einer weiteren bevorzugten Ausführungsform verjüngen sich die Tesla Kanäle wenigstens abschnittsweise in Richtung der Ansaugöffnungen.

Die vorliegende Erfindung ist weiterhin auf ein Verfahren zum Etikettieren von Behältnissen gerichtet, wobei wenigstens ein an dem Behältnis anzubringendes Etikett wenigstens zeitweise von einer Ansaugeinrichtung gehalten wird.

Die vorliegende Erfindung ist weiterhin auf ein Verfahren zum Transportieren von Kunststoffvorformlingen gerichtet, wobei wenigstens ein Kunststoffvorformling wenigstens zeitweise von einer Ansaugeinrichtung gehalten wird und wobei bevorzugt eine Vielzahl von Kunststoffvorformlingen von einer Vielzahl von Ansaugeinrichtungen gehalten wird.

Erfindungsgemäß wird zum Ansaugen des Kunststoffvorformlings oder der Kunststoffvorformlinge eine Ansaugeinrichtung mit einem Teslaventil und insbesondere eine Ansaugeinrichtung der oben beschriebenen Art verwendet.

Erfindungsgemäß wird zum Ansaugen des Etiketts eine Ansaugeinrichtung mit wenigstens einem Teslaventil und insbesondere eine Ansaugeinrichtung der oben beschriebenen Art verwendet.

Die vorliegende Erfindung ist weiterhin auf die Verwendung eines Teslaventils für eine Verpackungseinrichtung insbesondere zum Verpacken von Behältnissen gerichtet. Insbesondere handelt es sich bei der Verpackungseinrichtung um eine Etikettiermaschine oder eine Palettiermaschine.

Weitere Vorteile und Ausführungsformen ergeben sich aus den beigefügten Zeichnungen:
Darin zeigen:
- Fig. 1: eine Ansaugeinrichtung einer erfindungsgemäßen Vorrichtung;
- Fig. 2: die Ansaugeinrichtung aus Fig. 1 mit einer Darstellung von deren Inneren;
- Fig. 3: eine Schnittdarstellung, der in Fig. 2 gezeigten Vorrichtung;
- Fig. 4: eine weitere Schnittdarstellung der in Fig. 3 gezeigten Vorrichtung;
- Fig. 5: eine weitere Schnittdarstellung der in Fig. 4 gezeigten Vorrichtung;
- Fig. 6: eine Darstellung eines Teslaventils;
- Fig. 7: eine Darstellung einer Etikettiermaschine mit Ansaugeinrichtungen;
- Fig. 8: eine Detaildarstellung der Etikettiermaschine aus Fig. 7;
- Fig. 9: eine Darstellung eines weiteren Bestandteils der Etikettiermaschine;
- Fig. 10: eine Darstellung einer weiteren Anwendung der vorliegenden Erfindung;
- Fig. 11: eine Darstellung einer Vorrichtung zum Herstellen von Kunststoffbehältnissen;
- Fig. 12: eine Transporteinrichtung zum Transportieren von Kunststoffvorformlingen und
- Fig. 13: eine Greifeinrichtung zum Greifen von Kunststoffvorformlingen mit Teslaventilen.

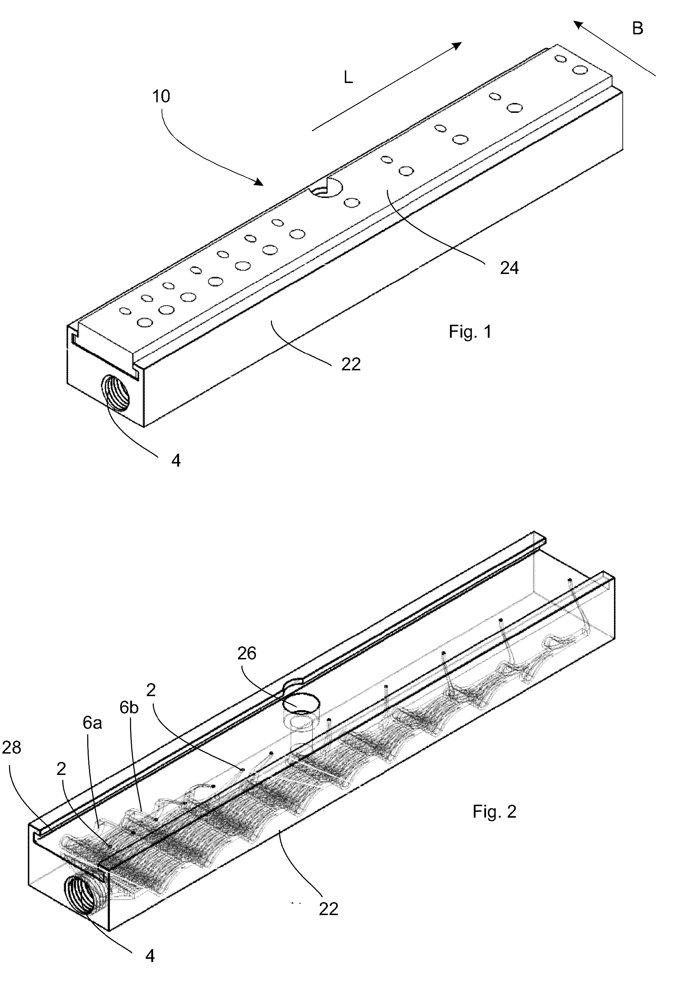

Fig. 1 zeigt eine Ansaugeinrichtung 10 (hier in Form einer Ansaugleiste für eine erfindungsgemäße Vorrichtung zum Verpacken von Behältnissen, bei der es sich insbesondere um eine Etikettiermaschine handelt. Das Bezugszeichen 4 kennzeichnet eine Hauptöffnung, an welche beispielsweise ein Schlauch oder mittelbar eine Unterdruckquelle angeschlossen werden kann, welche über die Hauptöffnung 4 Luft absaugt. Bevorzugt weist diese Hauptöffnung 4 ein Innengewinde auf, an welche beispielsweise ein Schlauch oder eine Kupplung anschraubbar ist.

Das Bezugszeichen 22 kennzeichnet einen Träger dieser Ansaugeinrichtung 10. An diesem Träger 22 ist eine Dichtungseinrichtung 24 angeordnet. Der Träger 22 stellt damit auch einen Verteilerblock dar bzw. eine Vakuumleiste. Die Dichtungseinrichtung 24 ist hier als Silikondichtung ausgeführt.

Das Bezugszeichen L kennzeichnet eine Längsrichtung, in welche sich die Ansaugeinrichtung erstreckt und das Bezugszeichen B eine Breitenrichtung, welche senkrecht zu der Längsrichtung L steht.

Fig. 2 zeigt den Träger 22 und auch teilweise dessen Inneres. Dieser Träger 22 weist wiederum die Hauptöffnung 4 auf und eine Vielzahl von Ansaugöffnungen 2, welches entlang der Längsrichtung L angeordnet sind.

Das Bezugszeichen 26 kennzeichnet eine Befestigungsöffnung, in welche eine Schraube eingeführt werden kann, um die Ansaugeinrichtung an einem Träger, beispielsweise einer Etikettiermaschine zu befestigen.

Zwischen den Ansaugöffnungen 2 und der Hauptöffnung 4 sind jeweils Ventileinrichtungen 6a, 6b... angeordnet, welche als Teslaventile ausgeführt sind. Bevorzugt ist dabei jeder Ansaugöffnung 2 ein solches Teslaventil 6a, 6b zugeordnet.

Wie oben erwähnt, wäre es jedoch auch möglich, einzelne Ansaugöffnungen ohne Ventil auszuführen, beispielsweise wenn an diesen Ansaugöffnungen 2 stets im Arbeitsbetrieb ein Element wie ein Etikett angelegt.

Das Bezugsrecht 28 kennzeichnet eine Befestigungsnut zum Befestigen der unter Bezugnahme auf Fig. 1 gezeigten Dichtungseinrichtung.

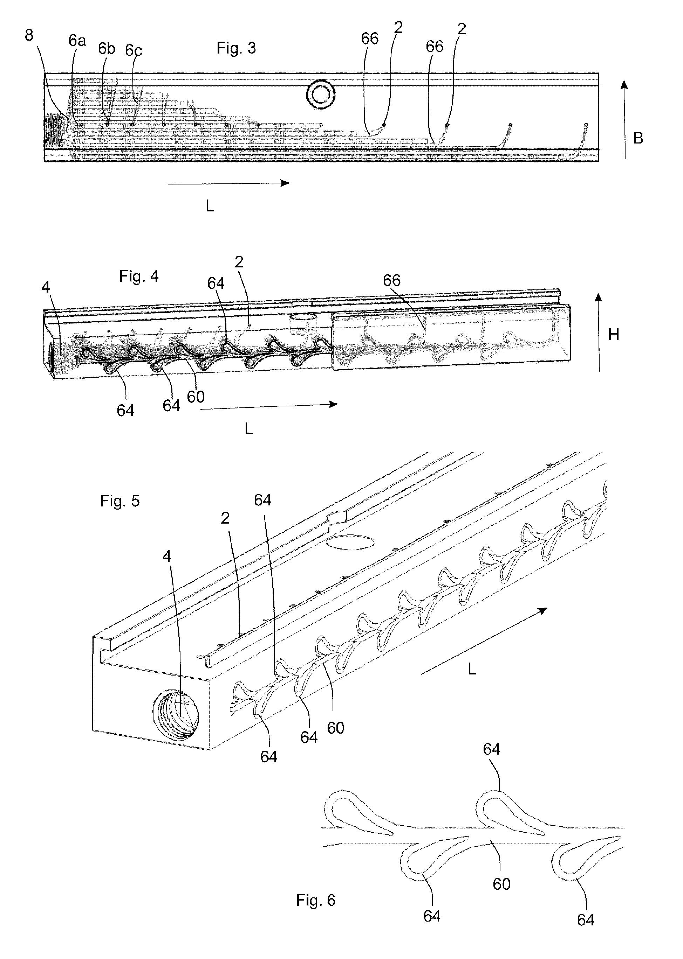

Fig. 3 zeigt eine Draufsicht auf den Träger 22. Hier sind wiederum eine Vielzahl der Ventile 6a, 6b, 6d zu erkennen. Das Bezugszeichen 8 kennzeichnet eine Verteileinrichtung, welche einen über die Hauptöffnung aufgebrachten Unterdruck auf die einzelnen Teslaventile 6a, 6b, 6c verteilt.

Man erkennt, dass die Teslaventile 6a, 6b, 6c in der Breitenrichtung B der Ansaugeinrichtung nebeneinander angeordnet sind. Bevorzugt sind die Teslaventile in der Längsrichtung L der Ansaugeinrichtung versetzt zueinander angeordnet.

Bevorzugt weisen die Teslaventile 6a, 6b, 6c in der Breitenrichtung B zueinander einen Abstand auf, der zwischen 5mm und 50mm, bevorzugt zwischen 8mm und 40mm und besonders bevorzugt zwischen 10mm und 30mm liegt.

Falls beispielsweise die Bohrungen einen Querschnitt von 1 bis 4mm aufweisen, liegt der Abstand bevorzugt zwischen 8mm und 12mm und bevorzugt bei ca. 10mm. Falls die Bohrungen einen Querschnitt von 4mm bis 8mm aufweisen, liegt der Abstand bevorzugt zwischen 15mm und 25mm, bevorzugt zwischen 17mm und 23mm und besonders bevorzugt zwischen 19mm und 21mm und besonders bevorzugt bei ca. 20mm.

Falls die Bohrungen einen Querschnitt von mehr als 8mm aufweisen, liegt der Abstand bevorzugt zwischen 25mm und 35mm, bevorzugt zwischen 27mm und 33mm und besonders bevorzugt zwischen 29mm und 31mm und besonders bevorzugt bei ca. 30mm.

Das Bezugszeichen 66 kennzeichnet einen Kanal, der ausgehend von einem Teslaventil zu der ihm zugeordneten Ansaugöffnung 2 führt. Man erkennt, dass hier zu jeder Ansaugöffnung 2 ein solcher Kanal führt und jeder Ansaugöffnung 2 auch ein solches Teslaventil 6a, 6b, 6c zugeordnet ist. Bevorzugt verjüngt sich der Kanal in Richtung der Ansaugöffnung. Es wäre jedoch auch möglich, dass mehrere Bohrungen einem Teslaventil zugeordnet sind.

Fig. 4 und Fig. 5 zeigen eine weitere Darstellung der erfindungsgemäßen Vorrichtung. Hier sind jeweils die einzelnen Schleifenkanäle 64 dargestellt, welche Bestandteile der einzelnen Tesla Ventile 6A, 6B sind.

Bevorzugt ragt ein Teil der Schleifenkanäle 64 jeweils in der Höhenrichtung H der Ansaugeinrichtung nach oben und ein weiterer Teil der Schleifenkanäle ragt in der der Höhenrichtung H nach unten. Bevorzugt ragen diese Schleifenkanäle in der Längsrichtung L der Ansaugeinrichtung abwechselnd nach in einer ersten Richtung und in einer zweiten, der ersten Richtung entgegengesetzten Richtung. Allgemein sind bevorzugt die Teslaventile abwechselnd angeordnet. Auf diese Weise können die Teslaventile in besonders platzsparender Weise in der Längsrichtung B der Ansaugeinrichtung hintereinander angeordnet werden.

Unter einem Schleifenkanal eines Teslaventils wird insbesondere derjenige Strömungskanal eines Teslaventils verstanden, der beim Betrieb des Teslaventils in einer Betriebsrichtung eine Gegenströmung erzeugt.

Bevorzugt sind die Schleifenkanäle jeweils wenigstens abschnittsweise gekrümmt. Bevorzugt sind die Schleifenkanäle 64 derart gestaltet, dass sie eine Umlenkung eines durch sie tretenden Mediums um wenigstens 30°, bevorzugt um wenigstens 50°, bevorzugt um wenigstens 70°, bevorzugt um wenigstens 90°, bevorzugt um wenigstens 110°, bevorzugt um wenigstens 130° und besonders bevorzugt um wenigstens 150° bewirken.

Daneben ist auch ein Hauptstrang 60 (eines Ventils) vorgesehen, der sich bevorzugt entlang der Längsrichtung L erstreckt. Dieser Hauptstrang 60 kann mehrere Bögen aufweisen, welche gemeinsam ein Teslaventil bilden. Die Hauptöffnung 4 verteilt auf mehrere Teslaventile.

In diesem Zusammenhang wird darauf hingewiesen, dass im Rahmen der vorliegenden Anmeldung die Verteilung derart erläutert wird, dass ein Vakuum bzw. ein Unterdruck verteilt wird. Die tatsächliche Strömungsrichtung verläuft jedoch in umgekehrter Richtung.

Fig. 6 zeigt eine vereinfachte schematische Darstellung eines Teslaventil mit mehreren hintereinander angeordneten Bögen.

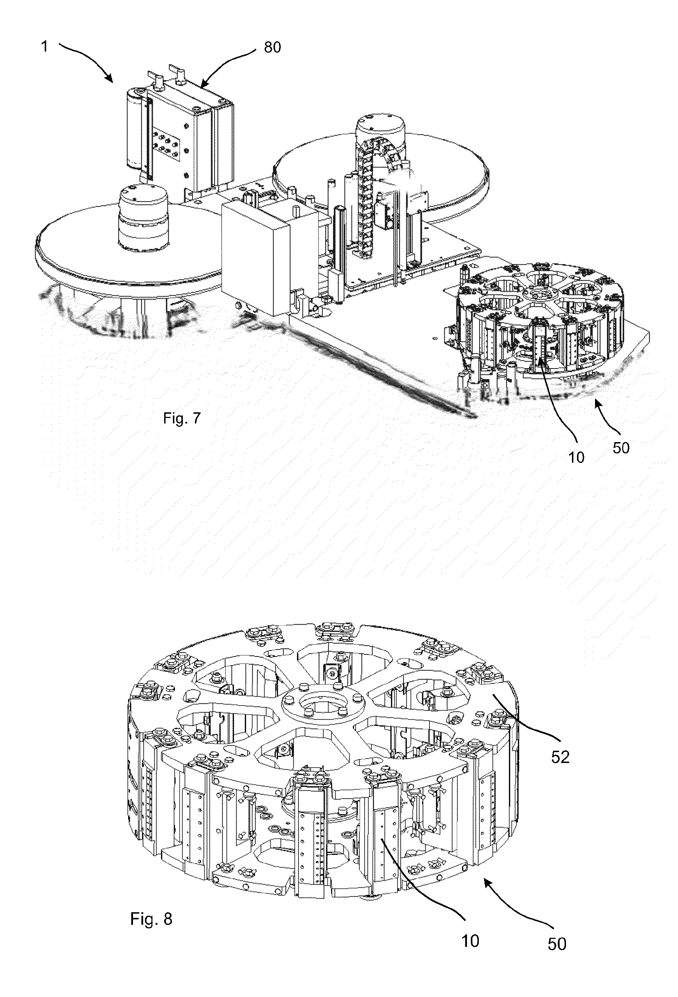

Fig. 7 zeigt eine schematische Darstellung einer Verpackungseinrichtung 1, hier in Form einer Etikettiermaschine. Diese Etikettiermaschine weist einen Vakuumzylinder 50 auf, der zum Transport von Etiketten dient. An diesem Vakuumzylinder ist eine Vielzahl von Ansaugeinrichtungen 10 in Form von Ansaugleisten angeordnet.

Das Bezugszeichen 80 kennzeichnet eine Verbindungseinheit, welche zum Verbinden von Etikettenrollen, genauer gesagt eines Endabschnitts einer ersten Etikettenrolle mit einem Anfangsabschnitt einer zweiten Etikettenrolle dient.

Fig. 8 zeigt eine Darstellung des in Fig. 7 gezeigten Vakuumzylinders. Dieser Vakuumzylinder weist einen mittels einer Welle 54 drehbar gelagerten Träger 52 auf, an dem eine Vielzahl von Saugleisten 10 angeordnet ist. Diese Sauleisten sind dabei bevorzugt von dem Träger demontierbar.

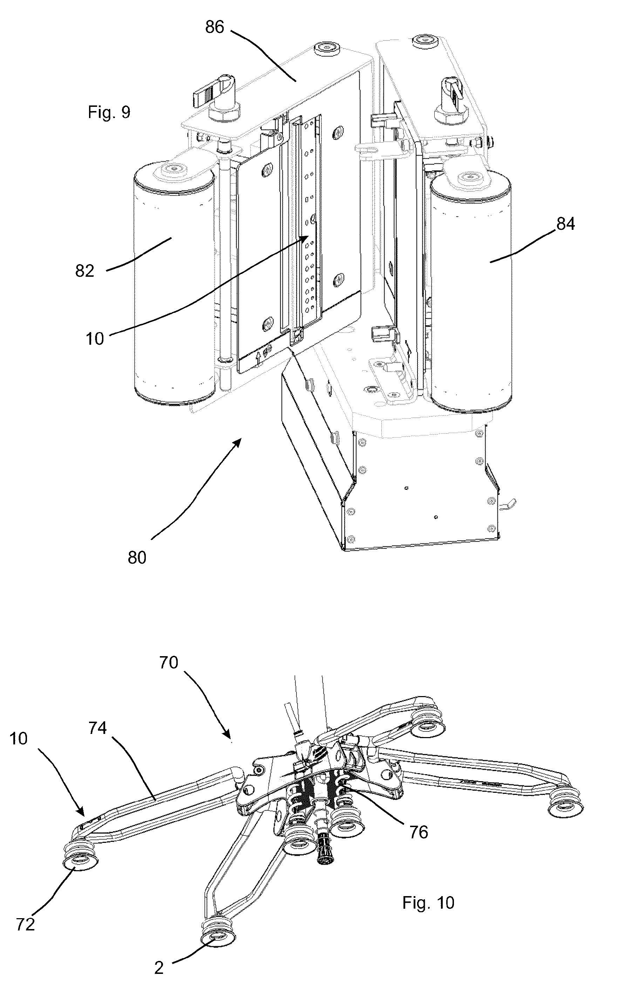

Fig. 9 zeigt eine Darstellung einer Verbindungseinheit 80. Diese weist hier zwei Saugleisten 10 auf (von denen jedoch nur eine sichtbar ist. Diese Saugleisten sind jeweils an bezüglich einander schwenkbaren Trägerarmen 86 angeordnet. Die Bezugszeichen 82 und 84 kennzeichnen Transportrollen, die zum Transport von Etikettenbändern (nicht gezeigt) dienen.

Fig. 10 veranschaulicht einen weiteren Anwendungsbereich für die vorliegende Erfindung. Hier ist eine Greifeinrichtung 70 dargestellt, welche beispielsweise zum Greifen von Lagen, beispielsweise Kartonlagen dient.

Diese Greifeinrichtung weist hier mehrere Ansaugeinrichtungen 10 auf. Die Ansaugeinrichtungen weisen bevorzugt jeweils Ansaugöffnungen auf, welche bevorzugt innerhalb von Saugnäpfen 72 angeordnet sind. Das Bezugszeichen 74 kennzeichnet einen Trägerarm, an welchem eine Ansaugeinrichtung 10 angeordnet ist. Das Bezugszeichen 76 kennzeichnet eine Federeinrichtung, welche hier eine Ansaugeinrichtung vorspannen kann.

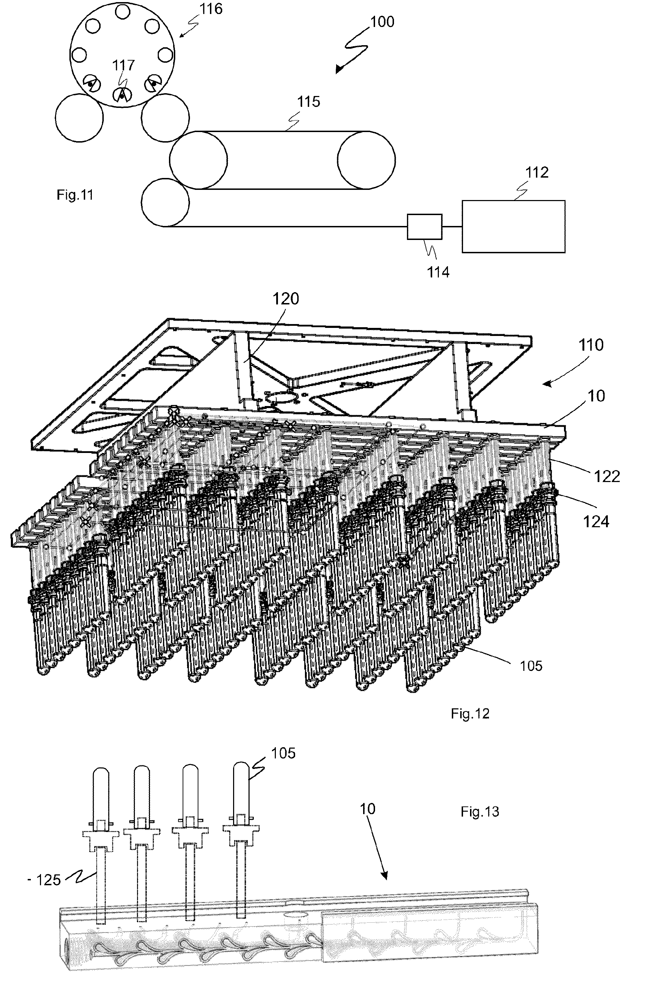

Die Fig. 11 - 13 beschreiben einen weiteren Anwendungsfall der vorliegenden Erfindung, nämlich das Halten und/oder den Transport von Kunststoffvorformlingen.

Fig. 11 zeigt eine Verpackungsvorrichtung 100 in Form einer Herstellungsanlage zum Herstellen von Kunststoffbehältnissen und insbesondere Kunststoffflaschen. Diese Herstellungsanlage weist eine Herstellungseinrichtung 112 auf, welche Kunststoffvorformlinge 105 herstellt. Bevorzugt handelt es sich bei dieser Herstellungseinrichtung 112 um eine Spritzgießmaschine.

Das Bezugszeichen 116 kennzeichnet eine Umformungseinrichtung, welche die Kunststoffvorformlinge zu Kunststoffflaschen umformt. Bevorzugt handelt es sich bei dieser Umformungseinrichtung um eine Blasformmaschine und insbesondere um eine Streckblasmaschine. Diese weist einen bewegbaren und insbesondere drehbaren Träger auf, an dem eine Vielzahl von Umformungsstationen angeordnet ist. Jede dieser Umformungsstationen weist eine Reckstange 117 auf, welche in die Kunststoffvorformlinge einführbar ist, um diese in deren Längsrichtung zu dehnen.

Das Bezugszeichen 115 kennzeichnet eine optionale Erwärmungseinrichtung, welche zum Erwärmen der Kunststoffvorformlinge dient.

Das Bezugszeichen 114 kennzeichnet schematisch eine Transporteinrichtung, welche dazu geeignet und bestimmt ist, die Kunststoffvorformlinge von der Herstellungseinrichtung 112 zu der Umformungseinrichtung 116 zu transportieren. Diese Transporteinrichtung weist eine Greifeinrichtung zum Greifen einer Vielzahl von Kunststoffvorformlingen auf.

Fig. 12 zeigt eine Greifeinrichtung 110, welche zum Greifen einer Vielzahl von Kunststoffvorformlingen 105 mittels Vakuum dient.

Diese Greifeinrichtung weist eine Vielzahl von Greifelementen 125 (vgl. Fig. 13) auf, welche jeweils zum Halten eines einzelnen Kunststoffvorformlings 105 geeignet und bestimmt sind. Jedes dieser Greifelemente weist jeweils ein Ansaugrohr 122 auf, sowie ein Kontaktelement 124, welches an einen Mündungsrand der Kunststoffvorformlinge anlegbar ist, um diesen so anzusaugen.

Das Bezugszeichen 10 kennzeichnet wieder eine Ansaugleiste, welche mit mehreren Ansaugrohren in Strömungsverbindung steht. Diese Ansaugleiste weist wenigstens ein und bevorzugt mehrere Teslaventile auf. Die Ansaugleiste 10 selbst wird wiederum mit einem Unterdruck beaufschlagt, wie oben beschrieben. Bei der hier gezeigten Ausführungsform ist eine Vielzahl derartiger Ansaugleisten vorgesehen, welche parallel zueinander ausgerichtet sind.

Das Bezugszeichen 120 kennzeichnet einen Träger, an dem eine Vielzahl von Ansaugleisten angeordnet ist.

Fig. 13 zeigt eine vergrößerte Darstellung einer Ansaugleiste 10, an der mehrere Greifelemente 125 angeordnet ist. Falls ein einzelnes Greifelement nicht mit einem Kunststoffvorformling bestückt ist, bewirkt das entsprechende Teslaventil, dass über die entsprechende Ansaugöffnung keine oder kaum Luft angesaugt wird.

Es wird darauf hingewiesen, dass sämtliche Merkmale, welche unter Bezugnahme auf das Verfahren beschrieben wurden, in entsprechender Weise auch für die Vorrichtung offenbart sind, was insbesondere bedeutet, dass die entsprechende Vorrichtung Einrichtungen aufweist, welche zur Durchführung der jeweiligen Verfahren geeignet und bestimmt sind. Weiterhin sind auch Merkmale, welche unter Bezugnahme auf die Vorrichtung beschrieben wurden entsprechend für das oder die Verfahren anwendbar. Dies bedeutet, dass die Verfahren unter Verwendung der entsprechenden Vorrichtungsmerkmale ausgeführt werden.

Die Anmelderin behält sich, vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verpackungsvorrichtung (1, 100) insbesondere für Behältnisse mit wenigstens einer Ansaugeinrichtung (10), welche dazu geeignet und bestimmt ist, ein Element und insbesondere ein flächiges Element oder einen Kunststoffvorformling anzusaugen, wobei die Ansaugeinrichtung (10) wenigstens eine mit einer Vakuumquelle verbindbare Hauptöffnung (4) aufweist und wenigstens eine Ansaugöffnung (2), welche dazu geeignet und bestimmt sind, das Element anzusaugen, wobei diese Ansaugöffnung (2) wenigstens zeitweise mit der Hauptöffnung (4) in Strömungsverbindung ist,
**dadurch gekennzeichnet, dass**
in einem Strömungspfad zwischen der Hauptöffnung (4) und der wenigstens einen Ansaugöffnung (2) ein passives fluidisches Ventil, insbesondere Teslaventil (6a, 6b) angeordnet ist.

2. Verpackungsvorrichtung (1) nach Anspruch 1,
**dadurch gekennzeichnet, dass**
in dem Strömungspfad zwischen der Hauptöffnung und der Ansaugöffnung und bevorzugt jeder der Ansaugöffnungen (2) ein fluidisches Ventil, insbesondere Teslaventil (6a, 6b) angeordnet ist.

3. Verpackungsvorrichtung (1) nach wenigstens einem der vorangegangenen Ansprüche,
**dadurch gekennzeichnet, dass**
die Ansaugeinrichtung (10) eine Vielzahl von Ansaugöffnungen (2) aufweist, welche wenigstens zeitweise in Strömungsverbindung mit der Hauptöffnung (4) stehen, wobei wenigstens zwischen einem Teil der Ansaugöffnungen (2) und der Hauptöffnung und bevorzugt zwischen allen Ansaugöffnungen (2) und der Hauptöffnung (4) fluidische Ventile, insbesondere Teslaventile (6a, 6b) angeordnet sind.

4. Verpackungsvorrichtung (1) nach wenigstens einem der vorangegangenen Ansprüche,
die Ansaugeinrichtung (10) eine Vakuumverteileinrichtung (8) aufweist, welche ein über die Hauptöffnung (4) aufgebrachtes Vakuum auf die einzelnen Ansaugöffnungen (2) aufteilt.

5. Verpackungsvorrichtung (1) nach wenigstens einem der vorangegangenen Ansprüche,
**dadurch gekennzeichnet, dass**
die Verpackungseinrichtung aus einer Gruppe von Verpackungseinrichtungen ausgewählt ist, welche Etikettiermaschinen, Füllmaschinen, Palettiermaschinen, Transporteinrichtungen zum Transportieren von Kunststoffvorformlingen oder Kunststoffflaschen, Verschließeinrichtungen zum Verschließen von Behältnissen und dergleichen enthält.

6. Verpackungsvorrichtung (100) nach wenigstens einem der vorangegangenen Ansprüche,
**dadurch gekennzeichnet, dass**
die Verpackungsvorrichtung (100) eine Einrichtung zum Herstellen von Kunststoffbehältnissen ist, wobei diese Verpackungsvorrichtung eine Herstellungseinrichtung (112) zum Herstellen von Kunststoffvorformlingen (105) und eine Umformungseinrichtung (116) zum Umformen von Kunststoffvorformlingen (105) zu Kunststoffbehältnissen aufweist sowie eine Transporteinrichtung (114) zum wenigstens abschnittsweise Transportieren von Kunststoffvorformlingen (105) von der Herstellungseinrichtung (112) zur Umformungseinrichtung (116) und diese Transporteinrichtung (114) die Ansaugeinrichtung aufweist.

7. Verpackungsvorrichtung (1) nach wenigstens einem der vorangegangenen Ansprüche,
die Ansaugeinrichtung (10) als Vakuumleiste (10) ausgebildet ist, welche insbesondere dazu geeignet und bestimmt ist, Etiketten oder Kunststoffvorformlinge anzusaugen.

8. Verpackungsvorrichtung (100) nach wenigstens einem der vorangegangenen Ansprüche,
**dadurch gekennzeichnet, dass**
die Verpackungsvorrichtung (100) eine Greifeinrichtung (110) aufweist, welche zum Greifen einer Vielzahl von Kunststoffvorformlingen geeignet und bestimmt ist und die Ansaugeinrichtung ein Bestandteil dieser Greifeinrichtung ist.

9. Verpackungsvorrichtung nach dem vorangegangenen Anspruch,
**dadurch gekennzeichnet, dass**
die Greifeinrichtung eine Vielzahl von Ansaugrohren (122) aufweist, welche zum Ansaugen der Kunststoffvorformlinge geeignet und bestimmt sind und bevorzugt jedes dieser Ansaugrohre (122) dazu geeignet und bestimmt ist genau einen Kunststoffvorformling anzusaugen.

10. Verpackungsvorrichtung (1) nach wenigstens einem der vorangegangenen Ansprüche,
die Ansaugeinrichtung (10) eine Vielzahl von Ansaugöffnungen aufweist, wobei bevorzugt an jeder dieser Ansaugöffnungen ein Kunststoffvorformlinge anordenbar ist.

11. Verpackungsvorrichtung (1) nach dem vorangegangenen Anspruch,
**dadurch gekennzeichnet, dass**
die Vakuumleiste einen Träger (22) aufweist, an welchem bevorzugt die Hauptöffnung (4) angeordnet ist, wobei bevorzugt an diesem Träger (22) eine Dichtungseinrichtung angeordnet ist.

12. Verpackungsvorrichtung (1) nach wenigstens einem der vorangegangenen Ansprüche,
dass die Teslaventile (6) jeweils Teslaventilkanäle (62) aufweisen, welche sich zu den Ansaugöffnungen erstrecken, wobei sich bevorzugt diese Teslaventilkanäle wenigstens teilweise in unterschiedliche Richtungen erstrecken.

13. Verfahren zum Etikettieren von Behältnissen, wobei wenigstens ein an dem Behältnis anzubringendes Etikett wenigstens zeitweise von einer Ansaugeinrichtung (10) gehalten wird,
**dadurch gekennzeichnet, dass**
zum Ansaugen des Etiketts eine Ansaugeinrichtung (10) mit einem Teslaventil, insbesondere eine Ansaugeinrichtung, nach wenigstens einem der vorangegangenen Ansprüche verwendet wird.

14. Verfahren zum Transportieren von Kunststoffvorformlingen wobei wenigstens ein Kunststoffvorformling wenigstens zeitweise von einer Ansaugeinrichtung gehalten wird und wobei bevorzugt eine Vielzahl von Kunststoffvorformlingen von einer Vielzahl von Ansaugeinrichtungen gehalten wird,
**dadurch gekennzeichnet, dass**
zum Ansaugen der Kunststoffvorformlinge eine Ansaugeinrichtung (10) mit einem Teslaventil, insbesondere eine Ansaugeinrichtung nach wenigstens einem der vorangegangenen Ansprüche verwendet wird.

15. Verwendung eines Teslaventils (6) für eine Verpackungsvorrichtung (1), insbesondere für Behälterhandling.
